# EUROPEAN PATENT APPLICATION

(11) **EP 4 819 736 A1**
(43) Date of publication of application: **07.10.2026**
(21) Application number: 24898201.9
(22) Date of filing: 29.11.2024
(51) Int. Cl.: H04W 72/21, H04L 1/08, H04L 5/00, H04W 72/231, H04B 7/0404, H04W 56/00

(54) **METHOD AND APPARATUS FOR MANAGING RADIO LINK IN COMMUNICATION SYSTEM**

(30) Priority: 01.12.2023 KR 20230172801; 19.06.2024 KR 20240079885; 28.11.2024 KR 20240174082
(71) Applicant: Electronics and Telecommunications Research Institute, Daejeon 34129 (KR)
(72) Inventor: KIM, Cheulsoon, Daejeon 34129 (KR); MOON, Sung Hyun, Daejeon 34129 (KR); LEE, Junghoon, Daejeon 34129 (KR); CHANG, Sung Cheol, Daejeon 34129 (KR)
(74) Representative: Betten & Resch
(86) International application number: PCT/KR2024/019277
(87) International publication number: WO 2025/116607

(57) **Abstract**

A method and an apparatus for managing a radio link in a communication system are disclosed. The method of a terminal comprises the steps of: transmitting a first uplink reference signal (UL RS) to one or more transmission and reception points (TRPs); transmitting a second UL RS to the one or more TRPs after a preset time from the transmission time point of the first UL RS; and receiving, from the one or more TRPs, a downlink (DL) channel compensated on the basis of the first UL RS and the second UL RS.

## Description

### [Technical Field]

The present disclosure relates to a communication technique, and more particularly, to a technique for radio link management.

### [Background Art]

To address the increasing demand for wireless data processing, a communication system (e.g., New Radio (NR) communication system) utilizing frequency bands (e.g., frequency bands above 6GHz) higher than those (e.g., frequency bands below 6GHz) of Long Term Evolution (LTE) (or LTE-A) is under consideration. The NR communication system can support frequency bands both below and above 6GHz, and can accommodate a variety of communication services and scenarios compared to the LTE communication system. For instance, usage scenarios of the NR communication system may include Enhanced Mobile BroadBand (eMBB), Ultra Reliable Low Latency Communication (URLLC), and massive Machine Type Communication (mMTC). Communication technologies are required to satisfy the requirements of eMBB, URLLC, and mMTC.

Meanwhile, alongside the advancement of information and communication technologies, various wireless communication technologies are being developed. The wireless communication technologies may encompass LTE communication technology and NR communication technology as specified in the 3rd Generation Partnership Project (3GPP) standards. The LTE communication technology may be one of the wireless communication technologies among fourth generation (4G) wireless communication technologies, while the NR communication technology may be one of the wireless communication technologies among fifth generation (5G) wireless communication technologies. Following the commercialization of the 4G communication systems (e.g., communication systems supporting LTE technology), there is consideration for 5G communication systems (e.g., communication systems supporting NR technology) that utilize frequency bands (e.g., frequency bands above 6GHz) higher than those of the 4G communication systems, in addition to frequency bands below 6GHz used by 4G communication systems, to address the increasing demand for wireless data processing. The 5G communication system can support eMBB, URLLC, mMTC, and/or Time Sensitive Communication (TSC) scenarios. In particular, mMTC, URLLC, and/or TSC can be applied in Internet of Things (IoT) scenarios. A single communication network (e.g., single communication system) can support all or some of the aforementioned scenarios. The mMTC scenario can satisfy the requirements of International Mobile Telecommunication (IMT)-2020 using Narrowband (NB)-IoT and LTE-MTC. Development of technologies to meet the requirements of the URLLC scenario is required.

### [Disclosure]

### [Technical Problem]

The present disclosure is directed to providing a method and an apparatus for radio link management in a communication system.

### [Technical Solution]

A method of a terminal, according to exemplary embodiments of the present disclosure for achieving the above-described objective, may comprise: transmitting a first uplink reference signal (UL RS) to one or more transmission and reception points (TRPs); transmitting a second UL RS to the one or more TRPs after a preset time from a time of transmitting the first UL RS; and receiving a downlink (DL) channel compensated based on the first UL RS and the second UL RS from the one or more TRPs, wherein consistency in transmissions of the first UL RS and the second UL RS is maintained.

The method may further comprise: receiving a request message requesting multiple UL RS transmissions from at least one TRP among the one or more TRPs, wherein transmissions of the first UL RS and the second UL RS are performed based on the request message.

The DL channel may be compensated based on a first difference between the first UL RS and the second UL RS received at a first TRP among the one or more TRPs and a second difference between the first UL RS and the second UL RS received at a second TRP among the one or more TRPs.

The first difference and the second difference may each be a time difference according to a time interval between transmission of the first UL RS and transmission of the second UL RS, and the time difference may correspond to a phase difference.

The first difference and the second difference may each be a power difference between a power of the first UL RS and a power of the second UL RS, and the power difference may correspond to a phase difference.

The DL channel may be a DL channel in which at least one of a time offset, frequency offset, or phase offset is compensated.

The consistency may include at least one of a same timing advance (TA) or a same transmission power.

Phase continuity in transmissions of the first UL RS and the second UL RS may be maintained.

A method of a first TRP, according to exemplary embodiments of the present disclosure for achieving the above-described objective, may comprise: receiving a first uplink reference signal (UL RS) from a terminal; receiving a second UL RS from the terminal after a preset time from a time of receiving the first UL RS; performing compensation for a downlink (DL) channel based on the first UL RS and the second UL RS; and transmitting the DL channel to the terminal, wherein consistency in transmissions of the first UL RS and the second UL RS is maintained.

The method may further comprise: transmitting a request message requesting multiple UL RS transmissions to the terminal, wherein transmissions of the first UL RS and the second UL RS are performed based on the request message.

The performing of compensation for the DL channel may comprise: deriving a first difference between the first UL RS and the second UL RS; receiving, from a second TRP, information of a second difference between the first UL RS and the second UL RS received at the second TRP; and performing compensation for the DL channel based on the first difference and the second difference.

The first difference and the second difference may each be a time difference according to a time interval between the first UL RS and the second UL RS, and the time difference may correspond to a phase difference.

The first difference and the second difference may each be a power difference between a power of the first UL RS and a power of the second UL RS, and the power difference may correspond to a phase difference.

The consistency may include at least one of a same timing advance (TA) or a same transmission power.

Phase continuity in transmissions of the first UL RS and the second UL RS may be maintained.

A terminal, according to exemplary embodiments of the present disclosure for achieving the above-described objective, may comprise at least one processor, wherein the at least one processor may cause the terminal to perform: transmitting a first uplink reference signal (UL RS) to one or more transmission and reception points (TRPs); transmitting a second UL RS to the one or more TRPs after a preset time from a time of transmitting the first UL RS; and receiving a downlink (DL) channel compensated based on the first UL RS and the second UL RS from the one or more TRPs, wherein consistency in transmissions of the first UL RS and the second UL RS is maintained.

The at least one processor may further cause the terminal to perform: receiving a request message requesting multiple UL RS transmissions from at least one TRP among the one or more TRPs, wherein transmissions of the first UL RS and the second UL RS are performed based on the request message.

The DL channel may be compensated based on a first difference between the first UL RS and the second UL RS received at a first TRP among the one or more TRPs and a second difference between the first UL RS and the second UL RS received at a second TRP among the one or more TRPs.

The first difference and the second difference may each be a time difference according to a time interval between transmission of the first UL RS and transmission of the second UL RS, and the time difference may correspond to a phase difference.

The first difference and the second difference may each be a power difference between a power of the first UL RS and a power of the second UL RS, and the power difference may correspond to a phase difference.

### [Advantageous Effects]

According to the present disclosure, a terminal may transmit a plurality of uplink reference signals (UL RSs) to a plurality of transmission and reception points (TRPs). The plurality of TRPs can perform compensation for a downlink (DL) channel based on the plurality of UL RSs received from the terminal and can transmit the DL channel to the terminal. The terminal can receive the DL channel from the plurality of TRPs. Since the DL channel has been pre-compensated at the plurality of TRPs, a compensation procedure for the DL channel at the terminal can be omitted or simplified. Accordingly, the efficiency of DL communication can be improved, and the performance of the communication system can be enhanced.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a sequence chart illustrating a first exemplary embodiment of a communication method between a terminal and TRP(s).
FIG. 4 is a conceptual diagram illustrating a first exemplary embodiment of an SRS resource.
FIG. 5 is a conceptual diagram illustrating a second exemplary embodiment of SRS resources.
FIG. 6 is a conceptual diagram illustrating a third exemplary embodiment of SRS resources.
FIG. 7 is a conceptual diagram illustrating a first exemplary embodiment of a tracking reference signal (TRS) resource.
FIG. 8 is a conceptual diagram illustrating a first exemplary embodiment of an SRS transmission method.
FIG. 9 is a conceptual diagram illustrating a second exemplary embodiment of an SRS transmission method.
FIG. 10 is a conceptual diagram illustrating a third exemplary embodiment of an SRS transmission method.
FIG. 11 is a conceptual diagram illustrating a fourth exemplary embodiment of an SRS transmission method.
FIG. 12 is a sequence chart illustrating a second exemplary embodiment of a communication method between a terminal and TRPs.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may be used in the same sense as a communication network.

In exemplary embodiments, 'configuration of an operation (e.g., transmission operation)' may mean 'signaling of configuration information (e.g., information element(s), parameter(s)) for the operation' and/or 'signaling of information indicating performing of the operation'. 'Configuration of information element(s) (e.g., parameter(s))' may mean that the corresponding information element(s) are signaled. The signaling may be at least one of system information (SI) signaling (e.g., transmission of system information block (SIB) and/or master information block (MIB)), radio resource control (RRC) signaling (e.g., transmission of RRC message(s), RRC parameter(s) and/or higher layer parameter(s)), MAC control element (CE) signaling (e.g., transmission of a MAC message and/or MAC CE), PHY signaling (e.g., transmission of downlink control information (DCI), uplink control information (UCI), and/or sidelink control information (SCI)), or a combination thereof.

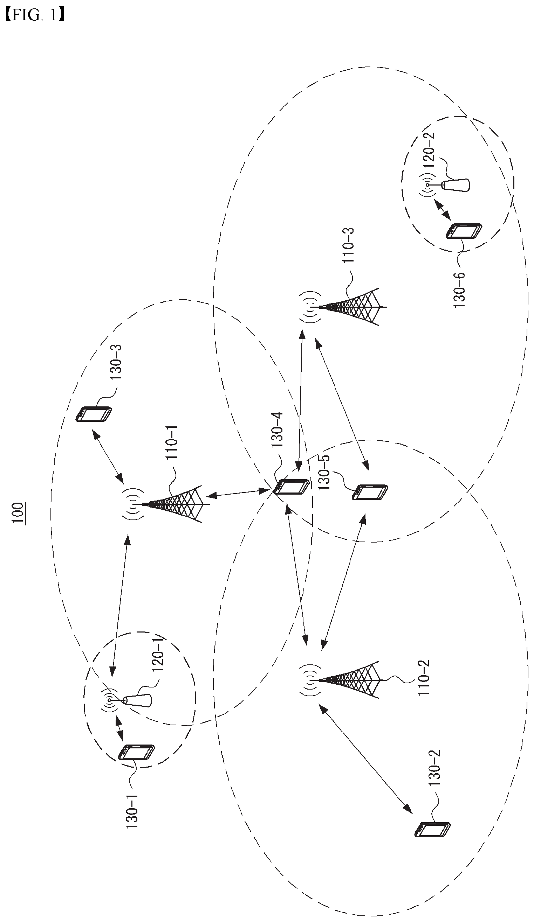

FIG. 1 is a conceptual diagram illustrating a first exemplary embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PDN)-gateway (P-GW), and mobility management entity (MME)). When the communication system 100 is the 5G communication system (e.g., NR system), the core network may include an access and mobility management function (AMF), a user plane function (UPF), a session management function (SMF), and the like.

The plurality of communication nodes 110 to 130 may support the communication protocols (e.g., LTE communication protocol, LTE-A communication protocol, NR communication protocol, etc.) defined by technical specifications of 3rd generation partnership project (3GPP). The plurality of communication nodes 110 to 130 may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like. Each of the plurality of communication nodes may have the following structure.

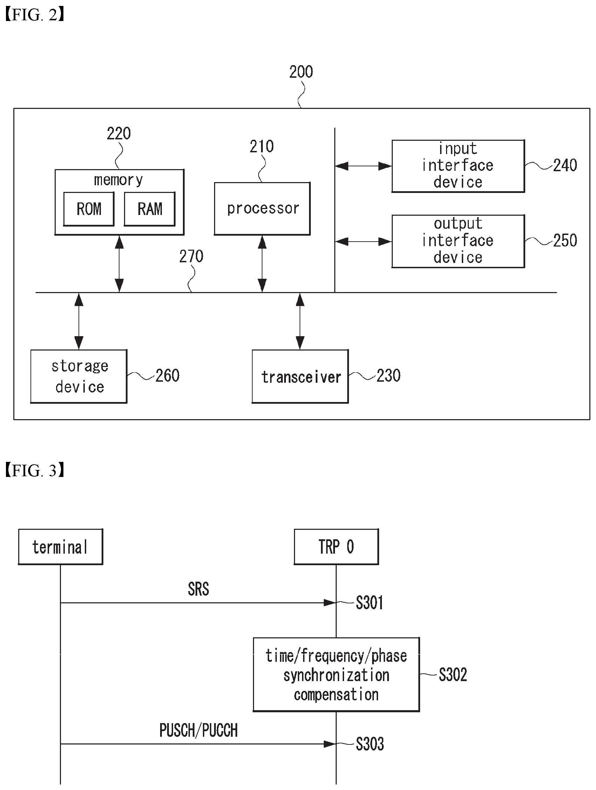

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, an evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multi-hop relay base station (MMR-BS), a relay station (RS), an advanced relay station (ARS), a high reliability-relay station (HR-RS), a home NodeB (HNB), a home eNodeB (HeNB), a roadside unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, operation methods of a communication node in a communication system will be described. Even when a method (e.g., transmission or reception of a signal) performed at a first communication node among communication nodes is described, the corresponding second communication node may perform a method (e.g., reception or transmission of the signal) corresponding to the method performed at the first communication node. That is, when an operation of the terminal is described, the corresponding base station may perform an operation corresponding to the operation of the terminal. Conversely, when an operation of the base station is described, the corresponding terminal may perform an operation corresponding to the operation of the base station. In the present disclosure, an operation of a TRP may be interpreted as an operation performed at a base station, and an operation of a base station may be interpreted as an operation performed at a TRP.

The communication system can support a variety of wireless communication technologies. The wireless communication technologies may include LTE communication technology, NR communication technology, etc. specified in the 3rd generation partnership project (3GPP) standard. The LTE communication technology may be one of the wireless communication technologies among fourth generation (4G) wireless communication technologies, while the NR communication technology may be one of the wireless communication technologies among fifth generation (5G) wireless communication technologies.

Following the commercialization of the 4G communication systems (e.g., communication systems supporting LTE technology), there is consideration for 5G communication systems (e.g., communication systems supporting NR technology) that utilize frequency bands (e.g., frequency bands above 6GHz) higher than those of the 4G communication systems, in addition to frequency bands below 6GHz used by 4G communication systems, to address the increasing demand for wireless data processing. The 5G communication system can support eMBB, URLLC, mMTC, and/or Time Sensitive Communication (TSC) scenarios. In particular, mMTC, URLLC, and/or TSC can be applied in Internet of Things (IoT) scenarios. A single communication network (e.g., single communication system) can support all or some of the aforementioned scenarios. The mMTC scenario can satisfy the requirements of IMT-2020 using NB-IoT and LTE-MTC. Development of technologies to meet the requirements of the URLLC scenario is required.

In order to reduce an error rate of data, a low modulation and coding scheme (MCS) level (or, low MCS index) may be applied. In order not to increase a size of a field indicated by downlink control information (DCI), frequently used MCS(s) may be selected. In order to apply a lower MCS, a repeated transmission operation may be supported. In case of applying a quadrature phase shift keying (QPSK) which is the lowest modulation rate, an effect of further reducing the code rate may occur. In particular, since a transmit power is limited in uplink (UL) transmission, the repeated transmission operation may be performed in the time domain rather than in the frequency domain.

In the case of eMBB traffic and URLLC traffic, a lower MCS may be used for different purposes, respectively. For example, for eMBB traffic, a lower MCS may be required to extend a coverage. On the other hand, for URLLC traffic, a lower MCS may be required to reduce a latency and achieve a lower error rate. Since the requirements are different, the eMBB traffic may be repeatedly transmitted even when a relatively large latency occurs. The URLLC traffic may be transmitted using new MCSs (e.g., low MCS) rather than the repeated transmission. The new MCS may be configured by an RRC message and/or a DCI.

In order to support repeated transmissions for the eMBB traffic in the time domain, a physical uplink shared channel (PUSCH) repetition (e.g., PUSCH repetition type A) may be introduced. In the present disclosure, a PUSCH repetition may mean a PUSCH instance. In other words, depending on the context, a PUSCH repetition may be interpreted as having the same meaning as a PUSCH instance. Repeated transmission of a PUSCH may be performed in units of PUSCH instances. When repeated transmission of a PUSCH is performed, a PUSCH allocated on a slot basis may be repeatedly transmitted. To extend a coverage, a time resource may be allocated over a plurality of slots. When the PUSCH repetition type A is used, the time resource may be configured by an RRC message and/or a DCI. The number of repetitions of the PUSCH may be indicated by the RRC message, and a time resource for transmitting the PUSCH in the first slot may be indicated by the DCI (e.g., in case of type 2 configured grant (CG) or dynamic grant) or the RRC message (e.g., in case of type 1 CG). In the present disclosure, the number of repetitions may mean the number of repeated transmissions or the number of transmissions.

Since a delay time occurs when URLLC traffic is transmitted repeatedly, it may not be appropriate to transmit URLLC traffic repeatedly. However, if a sufficiently low MCS is used, a delay in decoding URLLC traffic can be reduced. That is, when a sufficiently low MCS is used, the number of resource elements (REs) to which URLLC traffic is mapped may increase, and the base station (e.g., decoder of the base station) should wait until all the REs are received. In this case, a delay in decoding URLLC traffic may be reduced.

On the other hand, when a PUSCH with a somewhat high MCS applied is repeatedly transmitted, the base station may perform a decoding operation with only some REs. Therefore, a time when decoding is succeeded first in repeated PUSCH transmission (e.g., repeated PUSCH transmission with a somewhat high MCS applied) may be earlier than a time when decoding is succeeded first in a PUSCH transmission without repetition (e.g., PUSCH transmission with a low MCS applied). Since a PUSCH repetition type A is used, an unnecessary delay may occur, and thus a PUSCH repetition type B may be introduced to reduce a delay time due to repeated transmission. When the PUSCH repetition type B is used, a PUSCH allocated on a mini-slot basis may be transmitted repeatedly. When the PUSCH repetition type B is used, time resources may be configured by an RRC message and/or DCI. A combination of a reference time resource for PUSCH instances and the number of repetitions may be indicated by DCI (e.g., type 2 CG and/or dynamic grant) or an RRC message (e.g., type 1 CG).

In order to control a transmission power of a sounding reference signal (SRS) resource indicated by an SRS resource indicator (SRI), the base station may estimate a path loss for each SRS resource. The base station may use DCI to control a transmission power for SRS resource(s). The transmission power of the SRS resource(s) may be controlled based on the estimated path loss. The DCI may be scheduling DCI (e.g., DCI format 0_0, DCI format 0_1, DCI format 0_2, DCI format 1_0, DCI format 1_1, or DCI format 1_2) or group common (CG)-DCI (e.g., DCI format 2_2 or DCI format 2_3). The DCI may include a field indicating a transmit power control (TPC) command, and the TPC command may be used to control a transmission power of the terminal. For example, the transmission power of the terminal may increase or decrease based on the TPC command included in the DCI. To determine a transmission power of a PUSCH, the terminal may consider a value obtained based on a path loss, a value according to a TPC command included in DCI, and/or a PUSCH bandwidth indicated by the DCI.

The base station may configure two or more sets in the terminal using higher layer signaling. The terminal may receive configuration information of the two or more sets from the base station. Elements constituting the two or more sets may be transmission power parameter(s) and may be indicated to be suitable for different scenarios (e.g., URLLC scenario, eMBB scenario). The terminal may receive scheduling DCI or activating DCI allocating a PUSCH resource from the base station, and the scheduling DCI or activating DCI may indicate a set for interpreting transmission power parameter(s). If a different set of transmission power parameter(s) is used, a size of increase or decrease in transmission power indicated by the same TPC command may vary.

When a type 1 configured grant (CG) or type 2 CG is used, a transmission power may be determined based on the DCI format 2_3 for an SRI associated with a PUSCH instance. When the type 2 CG is used, activating DCI may indicate a set of transmission power parameter(s) applicable to a PUSCH occasion. The PUSCH occasion may refer to a PUSCH instance. The terminal may obtain a TPC command for an SRI by receiving GC-DCI, interpret the TPC command to suit the set of transmission power parameter(s) indicated by the base station, and derive a transmission power to be applied to the PUSCH instance based on a result of the interpretation.

In transmission of a dynamically scheduled PUSCH, the terminal may derive a transmission power to be applied to a PUSCH instance based on a combination of GC-DCI and scheduling DCI. By receiving the GC-DCI, the terminal may identify a TPC command corresponding to an SRI and store the identified TPC command. In transmission of a dynamically scheduled PUSCH, a set of transmission power parameter(s) and/or a TPC command applicable to a PUSCH occasion may be indicated by scheduling DCI. The terminal may derive a transmission power to be applied to the PUSCH instance based on a transmission power of an SRI associated with the PUSCH instance.

Repeated HARQ-ACK transmission may be indicated (or configured) by higher layer signaling for each physical uplink control channel (PUCCH) format (or, PUCCH resource). The number of repetitions for a PUCCH format i may be set independently. i may be 1, 3, or 4. The terminal may repeatedly transmit the PUCCH format (or, PUCCH resource) in slots. In this case, the PUCCH format (or, PUCCH resource) may be transmitted using the same time resources in the respective slots.

Uplink control information (UCI) types may be classified according to types of information included in UCI. UCI may include at least one of a scheduling request (SR), layer 1-reference signal received power (L1-RSRP), HARQ-ACK, or channel state information (CSI). In exemplary embodiments, 'UCI' and 'UCI type' may be used with the same meaning. In a repeated transmission operation of UCI, only one UCI type may be transmitted. In order to support this operation, priorities of UCI types may be defined in the technical specifications. One UCI type may be selected, and a PUCCH including the one UCI type may be transmitted repeatedly. In this case, the terminal may assume that other UCI types are not transmitted before transmission of the selected UCI type is completed. In order to support this operation, the base station may indicate the terminal to transmit UCI (e.g., SR or HARQ-ACK) after PUCCH transmission is completed. A waiting time for transmitting the UCI may be long, and the waiting time may act as a scheduling constraint for the base station.

When transmission of HARQ-ACKs in the same slot (or the same subslot) is indicated or when PUCCH time resources indicated by DCIs and/or RRC messages allocating physical downlink shared channels (PDSCHs) overlap with each other, the terminal may generate a HARQ codebook so that they are transmitted on one PUCCH (e.g., one PUCCH time resource). Within the HARQ codebook, HARQ-ACK bits may be arranged according to an order defined in the technical specifications. Information bits may be generated according to the above-described operation. The terminal may generate coded bits by performing an encoding operation.

A Reed Muller code or polar code may be used in the encoding operation. A code rate applied in the encoding operation may be indicated by higher layer signaling. For example, one value in a PUCCH format may be a code rate and may be indicated to the terminal.

One codeword may be mapped to one PUCCH. In a repeated PUCCH transmission operation, one UCI type may be generated as a codeword. When a PUCCH is transmitted once, information bits of one UCI type or two or more UCI types may be concatenated, and the terminal may generate one codeword by performing the same encoding operation on the information bits. When a Reed-Muller code or polar code is used, it may be difficult to perform soft combining operations may be difficult in terms of implementation. Therefore, even when a PUCCH is transmitted repeatedly, the same codeword may be transmitted, and the base station may perform a chase combining operation for the same codeword. The codeword or coded bits may refer to a bit string in which a plurality of code blocks are concatenated. A modulation operation may be performed on the codeword, and a result of the modulation operation may be mapped to REs.

Meanwhile, UCIs having the same UCI type may be considered as different information. The UCIs having the same UCI type, which are considered as different information, may be mapped. For example, the UCIs may be generated to support traffic with different priorities. UCI (e.g., SR or HARQ-ACK) supporting eMBB traffic may be considered distinct information from UCI (e.g., SR or HARQ-ACK) supporting URLLC traffic. In this case, information having the same UCI type may be distinguished as different information.

The coded UCI may be mapped to a PUCCH. The same preprocessing scheme (e.g., spatial information, spatial relation) may be maintained in a PUCCH transmission operation. Alternatively, in the PUCCH transmission operation, use of a different preprocessing scheme for each PUCCH may be allowed by signaling (e.g., RRC signaling) of the base station.

In order to support URLLC traffic, it may be preferable for the terminal to perform frequent reception operations in DL resources and/or frequent transmission operations in UL resources. In a time division duplex (TDD) system, the terminal may operate based on a half-duplex scheme. Therefore, a support time of DL traffic and/or UL traffic may increase depending on a slot pattern. On the other hand, in a frequency division duplex (FDD) system, the terminal may simultaneously utilize DL resources and UL resources. Therefore, the problems described above in the TDD system may not occur in the FDD system. The FDD system may use two or more carriers. When two or more serving cells are configured for the terminal in the TDD system, the terminal may utilize DL resources and UL resources.

In a communication system that includes at least one carrier to which FDD is applied (hereinafter referred to as 'FDD carrier'), there may be no latency problem in the terminal. In a communication system that includes only carrier(s) to which TDD is applied (hereinafter referred to as 'TDD carrier(s)'), there may be a latency problem in the terminal. To solve the above-described problem, slots in TDD carriers may be configured according to different patterns.

Transmission of eMBB traffic and/or URLLC traffic may be supported in at least one of a licensed band or an unlicensed band. Carrier(s) belonging to a licensed band may be used alone. Carrier(s) belonging to an unlicensed band may be used alone. Alternatively, depending on a configuration by the base station, both carrier(s) belonging to the licensed band and carrier(s) belonging to the unlicensed band may be used based on a carrier aggregation scheme.

In exemplary embodiments, two or more terminals may receive data from one or more TRPs and transmit data to one or more TRPs. It may be assumed that one base station or one server performs management operations and/or scheduling operations for one or more TRPs among a plurality of TRPs. The TRPs may be directly connected. Alternatively, the TRPs may be connected through the base station. The above-described connection may be a connection according to an Xn interface or a radio interface (e.g., 3GPP NR interface).

A shadow area may occur between coverages supported by TRPs. Therefore, the TRPs may resolve the shadow area through cooperative transmission. The cooperative transmission may be performed for a terminal located between the TRPs. Even when no shadow area occurs, a quality of a radio link may be improved by installing a large number of TRPs (or base stations) to transmit and receive a lot of data.

According to cooperative transmission and cooperative reception of TRPs, communication schemes may be classified into dynamic point selection (DPS) and joint transmission (JT). For a specific physical resource block (PRB) set, DPS may be a method of receiving data through one TRP, and JT may be a method of receiving data through two or more TRPs. Dynamic point blanking (DPB) may be a type of JT. When DPB is used, the terminal may not receive data from some TRPs and may receive data from the remaining TRPs. JT may be further classified into coherent JP and noncoherent JP. Depending on whether coherent combining operations are performed on signals received from TRPs, coherent JP or non-coherent JP may be used.

Depending on a latency and/or traffic allowance of a backhaul to which base stations or TRPs are connected, the TRPs may participate in cooperative transmission and/or cooperative reception in real time. Alternatively, depending on a latency and/or traffic allowance of a backhaul to which base stations or TRPs are connected, the TRPs may not participate in cooperative transmission and/or cooperative reception in real time. The TRPs may be connected to (e.g., associated with) the same base station or to different base stations. The terminal may support JT by receiving single DCI (sDCI) or multiple DCIs (mDCI).

When sDCI is used, the terminal may transmit and receive data with TRPs. The TRPs may cooperate through a backhaul without latency. When mDCI is used, the terminal may transmit and receive data with some TRPs and other TRPs. However, when it is difficult for TRPs to cooperate in real time through a backhaul, the terminal may perform communication using semi-static resources (e.g., divided semi-static resources).

In order to distinguish TRPs, control resource set (CORESET) pool indexes may be introduced. A CORESET pool index may indicate a set of CORESETs. A transmission configuration indication (TCI) state of each CORESET may be independently indicated to the terminal through signaling (e.g., RRC signaling and/or MAC CE signaling). A CORESET pool index may not necessarily correspond to a TRP. A TRP may be classified into a transmission point (TxP) and a reception point (RxP), and a CORESET pool index may correspond to an RxP. For example, an Rx beam of a terminal receiving a DL signal/channel from a TxP may be derived from a TCI state, and UL signals/channels scheduled by DCIs detected in CORESETs belonging to a CORESET pool corresponding to one CORESET pool index may be interpreted as being received from the same RxP. In the present disclosure, 'DL signal/channel' may refer to 'DL signal and/or DL channel', and 'UL signal/channel' may refer to 'UL signal and/or UL channel'.

When synchronization between TRPs is acquired and a CSI report is shared therebetween, performance gains may occur due to coherent combining operations performed in the terminal. When the above-mentioned condition(s) are not satisfied, it may be advantageous in terms of performance for non-coherent combining operations to be performed in the terminal.

When a terminal is mounted on a vehicle, there may be fewer restrictions on the size and/or weight of the terminal. Portability may be considered for a terminal directly used by a human.

In order to extend a coverage, small cells or IAB nodes may be deployed in the communication system. A throughput of the small cell or IAB node may be affected by a quality of a backhaul. Securing a backhaul (e.g., high-quality backhaul) may be expensive. As an alternative to the above-described problem, wireless repeaters may be deployed in the communication system, and signals with high quality can be transmitted to the terminal through the wireless repeaters. The wireless repeaters may be classified into several types depending on a scheme of transferring signals. A wireless repeater that supports many functions may provide performance similar to that of a base station. When wireless repeaters supporting fewer function(s) are deployed, a communication system including the wireless repeaters may be constructed at low cost. In the present disclosure, the wireless repeaters may support beamforming functions for terminal(s) and minimum function(s) for transferring data to terminal(s). The base station may transmit signals/channels to control the wireless repeaters. The wireless repeaters may receive signals/channels (e.g., control signals/control channels) from the base station, and configure appropriate parameter(s) based on the received signals/channels. In other words, the base station may configure appropriate parameter(s) to the wireless repeaters to control the wireless repeaters.

FIG. 3 is a sequence chart illustrating a first exemplary embodiment of a communication method between a terminal and TRP(s).

Referring to FIG. 3, when a terminal has mobility, it may be preferable for a base station and/or a TRP to track the terminal (e.g., terminal with mobility). The terminal may perform a timing adjustment operation (e.g., timing advance (TA) adjustment operation) and/or a power control operation with a serving TRP (e.g., TRP 0) using a physical random access channel (PRACH). In step S301, the terminal in RRC connected state may transmit an SRS to the TRP 0, and the TRP 0 may receive the SRS from the terminal. In step S302, the TRP 0 may perform a compensation operation for time, frequency, and/or phase synchronization based on the SRS. For example, the TRP 0 may perform compensation and/or offset operations for a time offset based on the SRS, the TRP 0 may perform compensation and/or offset operations for a frequency offset based on the SRS, and the TRP 0 may perform compensation and/or offset operations for a phase offset based on the SRS.

The TRP 0 may perform scheduling for uplink transmission and/or downlink transmission based on the compensation operation for time, frequency, and/or phase synchronization (e.g., a result of the synchronization compensation operation). For example, the TRP 0 may dynamically adjust an MCS for PUSCH transmission. The TRP 0 may utilize the result of the compensation operation for time, frequency, and/or phase synchronization as additional information for cooperative transmission with other TRP(s). The TRP 0 may transmit scheduling information (e.g., DCI including the scheduling information) for uplink transmission to the terminal. The terminal may receive the scheduling information (e.g., DCI) from the TRP 0. In step S303, the terminal may transmit an uplink transmission (e.g., PUSCH transmission and/or PUCCH transmission) to the TRP 0 based on the scheduling information, and the TRP 0 may receive the uplink transmission from the terminal.

The TRP 0 may be connected to a TRP 1 via a backhaul (e.g., Xn interface or F1 interface). When the base station and/or TRPs do not have an ideal backhaul, a latency and/or capacity of the backhaul (e.g., Xn interface or F1 interface) may be considered. The capacity may correspond to the maximum amount of data that can be transmitted by a TRP per unit time. If a large latency is allowed, the entire data can be transmitted, so only latency may be considered. To perform joint processing and/or joint scheduling, the TRPs may exchange necessary information in advance, considering the latency. The TRPs may perform joint transmission in predefined resources (e.g., time and/or frequency resources). The terminal may receive configuration information of uplink (UL) RS (e.g., SRS) from the serving TRP and/or serving cell. In other words, the configuration information of UL RS may be configured (e.g., indicated) to the terminal. The terminal may transmit an UL RS based on the configuration information. The TRPs may receive the UL RS from the terminal and derive necessary metrics based on the UL RS. The TRPs may deliver the metrics via the backhaul (e.g., Xn interface or F1 interface). The TRPs may perform joint transmission by utilizing the metrics.

The terminal may transmit an uplink transmission to the base station and/or TRP based on the SRS. In the exemplary embodiment of FIG. 3, the terminal may transmit a UL signal/channel (e.g., UL signal and/or UL channel) to the serving TRP (e.g., TRP 0). The terminal may roughly perform link management using the SRS. The base station (e.g., TRP) may control a transmission power of the terminal by considering a quality of the SRS. The base station (e.g., TRP) may estimate a signal-to-interference-plus-noise ratio (SINR) (e.g., received SINR). Accordingly, the base station (e.g., TRP) may determine an MCS for UL transmission (e.g., PUSCH/PUCCH transmission).

The quality of the SRS may refer to an SRS quality measured at the base station. The SRS quality may be determined based on fading in a wireless channel. The fading may be classified into small-scale fading and large-scale fading. A distance between the terminal and the TRP may determine large-scale fading. An SRS coverage may refer to geographical location(s) of terminal(s) satisfying a specific quality. Terminal(s) satisfying a specific quality may be determined using SINR (or RSRP) measured at the TRP or an implementation-specific metric.

In a conventional communication system, there may be a little need to consider the SRS coverage. This is because a TRP coverage refers to a DL coverage (e.g., SIB coverage). Alternatively, since a service coverage can be determined by using a PDCCH reception quality at an aggregation level of a common search space set, there may be a little need to consider SRS coverage in a conventional communication system. A terminal may establish an RRC connection with a base station (e.g., TRP). A TRP may estimate large-scale fading by using an SRS. The terminal may receive configuration information for repeated transmission of a UL RS (e.g., the number of repetitions). In other words, the configuration of repeated UL transmission may be indicated to the terminal. The terminal may repeatedly transmit the UL RS. When the UL RS is repeatedly transmitted, a quality of the UL RS (e.g., SRS and/or demodulation-reference signal (DM-RS)) received at the TRP can be improved.

According to a proposed method, a terminal may receive configuration information for repeated transmission of a UL RS (e.g., SRS) (e.g., the number of repetitions) from a serving base station through signaling (e.g., RRC signaling) and may apply the received configuration information to the repeated transmission of the UL RS. In other words, the configuration of repeated UL RS transmission may be indicated to the terminal by the base station.

When UL RSs have the same number of repetitions and UL coherence is maintained for UL RS transmissions, a reception quality of the UL RS (e.g., SRS/DM-RS) at the TRP can be improved. The TRP may estimate a wireless channel by aggregating repeatedly received instances.

For coverage expansion, the terminal can maintain phase continuity and/or phase coherence by aggregating a plurality of slots or a plurality of instances. The number of aggregated slots or the number of aggregated instances may be determined according to a capability of the terminal. The base station may configure (e.g., indicate) the length of a coherence window to the terminal through signaling (e.g., RRC signaling) in consideration of the capability of the terminal. The terminal may determine the length of the coherence window configured (e.g., indicated) by the base station.

When a transmission power of the terminal changes, when a transmission beam of the terminal changes, when a transmit precoding matrix indicator (TPMI) of the terminal changes, when a TA changes, and/or when the terminal performs frequency hopping, the phase continuity may not be maintained. In other words, phase noise may occur. Equation 1 below may represent a relationship between signals (e.g., y[i] and y[j]) transmitted by the terminal.
[Equation 1] $\begin{matrix}y \left[i\right] = h ⋅ x \left[i\right] + n \left[i\right] \\ y \left[j\right] = h ⋅ x \left[i\right] ⋅ m ⋅ {e}^{ϕ \sqrt{- 1}} + n \left[j\right] = h ′ ⋅ x \left[i\right] + n \left[j\right] , where h ′ = h ⋅ m ⋅ {e}^{ϕ \sqrt{- 1}}\end{matrix}$

The terminal may transmit different UL signal/channel instances (e.g., SRS instance i and SRS instance *j,* PUSCH instance *i* and PUSCH instance *j,* or PUCCH instance i and PUCCH instance j) on the same wireless channel. Due to the transmission of different UL signal/channel instances, phase noise may occur. The phase noise may be expressed as $m ⋅ {e}^{ϕ \sqrt{- 1}}$*.*

The base station may not be able to estimate $m ⋅ {e}^{ϕ \sqrt{- 1}}$*.* Therefore, h and h' may each be estimated independently. Even when the terminal performs repeated transmission for coverage expansion, the base station may not be able to perform joint channel estimation but may perform soft combining for a data part of a PUSCH or a data part of a PUCCH.

When consistency is maintained for the transmission of UL signal/channel instances in a coherence window (e.g., $m ⋅ {e}^{ϕ \sqrt{- 1}} = 1$), the base station may perform joint channel estimation. To support the above-described operation, the terminal may not update a TA at a slot boundary. Alternatively, to support the above-described operation, the terminal may not update a transmission power. In other words, TAs and transmission powers for UL signal/channel instance transmissions performed in multiple slots (e.g., consecutive slots) may be the same.

According to a proposed method, the terminal may receive signaling (e.g., RRC signaling) including a configuration required for maintaining consistency in repeated SRS transmission. The terminal may repeatedly transmit an SRS based on the configuration. The terminal may transmit the SRS using the same power (e.g., the same transmission power) and the same Tx beam in the same subcarrier(s). In this case, consistency for repeated SRS transmission may be maintained.

For example, one SRS resource may include one or more symbols (e.g., one or more SRS symbols). The SRS symbols included in one SRS resource may correspond to the same SRS port(s). The same power and the same Tx beam may be applied to SRS transmission in the SRS symbols included in one SRS resource. As another example, two or more SRS resources may be considered. The same power and the same Tx beam may be applied to SRS transmissions in different SRS resources. In this case, to maintain the same power, the different SRS resources may be arranged consecutively in the time domain. In other words, the different SRS resources may be configured in a time division multiplexing (TDM) scheme. Alternatively, the different SRS resources may be arranged in the same symbols, and the different SRS resources arranged in the same symbols may be distinguished in the frequency domain. In other words, the different SRS resources may be configured in a frequency division multiplexing (FDM) scheme. When the different SRS resources are distinguished in the time domain, the last symbol of one SRS resource may be adjacent to the first symbol of another SRS resource.

A UL beam management method in repeated SRS transmission may be considered. A UL beam pairing procedure (e.g., UL beam management procedure) may be divided into a U1 stage, a U2 stage, and a U3 stage. In the U1 stage, the terminal may transmit a PRACH, and the TRP 0 (or, serving base station or serving cell) may receive the PRACH of the terminal. The TRP 0 may determine an Rx beam based on the received PRACH. In the U2 stage, the terminal may repeatedly transmit a UL signal/channel using the same UL beam, and the TRP 0 may experiment with Rx beams based on the repeatedly received UL signal/channel to select the best Rx beam 0. In the U3 stage, the terminal may transmit a UL signal/channel using different UL beams, and the TRP 0 may receive the UL signal/channel of the terminal through the Rx beam 0. The TRP 0 may select the best UL beam of the terminal based on the received UL signal/channel.

In the U2 stage, the terminal may transmit a UL RS (e.g., SRS), and the terminal may receive a configuration or indication regarding enabling or disabling of repeated SRS transmission. An SRS resource set may be configured to be utilized for beam management, and SRS resource(s) belonging to the SRS resource set may have a single port, and the SRS may be repeatedly transmitted in adjacent symbols. The TRP 0 may receive the SRS in each SRS resource by changing Rx beams. In the present disclosure, a port related to an SRS resource (e.g., SRS transmission) may be referred to as an SRS port, and a symbol belonging to an SRS resource (e.g., a symbol in which an SRS is transmitted) may be referred to as an SRS symbol.

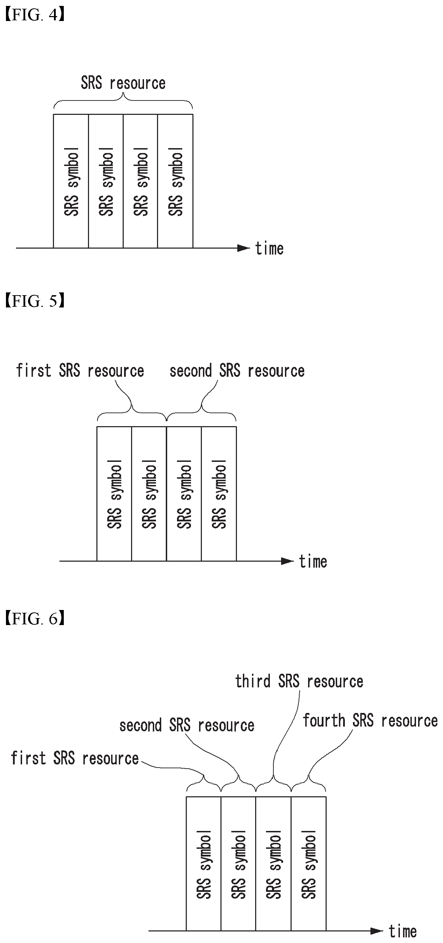

FIG. 4 is a conceptual diagram illustrating a first exemplary embodiment of an SRS resource.

Referring to FIG. 4, an SRS resource may have four ports. The terminal may transmit an SRS using four ports in the same frequency resource. The SRS may be transmitted in adjacent symbols. The number of ports of the SRS resource may be the same as the number of symbols belonging to the SRS resource (e.g., the number of symbols in which the SRS is transmitted). SRS transmission for four ports may be performed in one symbol. Since SRS transmission in symbols (e.g., SRS symbols) belonging to SRS resources needs to be demodulated based on a code division multiplexing (CDM) scheme, consistency for SRS transmission may need to be maintained.

FIG. 5 is a conceptual diagram illustrating a second exemplary embodiment of SRS resources.

Referring to FIG. 5, an SRS resource may have two ports. SRS transmission may be performed in a first SRS resource and a second SRS resource. The same resource (or the same SRS transmission) may be repeated in the first SRS resource and the second SRS resource. Alternatively, the first SRS resource and the second SRS resource may be different resources. The different SRS transmissions may be performed in the first SRS resource and the second SRS resource. While consistency for SRS transmission may be maintained in the same resource, consistency for SRS transmission may not be maintained in different resources. Even when the same resource is repeated, consistency between SRS resources may not be maintained.

FIG. 6 is a conceptual diagram illustrating a third exemplary embodiment of SRS resources.

Referring to FIG. 6, an SRS resource may have a single port, and an SRS resource having a single port may be repeated four times. To perform the U2 stage of the UL beam management procedure, SRS transmission may be repeated four times in an SRS resource configured as a single symbol. In other words, SRS transmission may be repeated in each of four SRS resources. The SRS may be transmitted in consecutive symbols. In repeated SRS transmission, the UL beam (e.g., Tx beam) of the terminal may be maintained. In other words, the terminal may repeatedly transmit the SRS using the same UL beam. Consistency between SRS symbols may not be maintained.

According to a proposed method, the terminal may transmit the SRS in two or more SRS resources, and consistency for SRS transmissions in two or more SRS resources may be maintained. Additional signaling (e.g., RRC signaling including a configuration for maintaining consistency) may be indicated to the terminal. Different SRS resources may be configured in the same subcarrier(s), and the same power and/or the same Tx beam may be applied to the different SRS resources.

The respective SRS ports of SRS transmissions for which consistency is maintained may be utilized for joint channel estimation. Since SRS transmissions having the same SRS port is received at a predetermined time interval, the mobility of the terminal may be estimated based on the received SRS transmissions. When the terminal maintains consistency for SRS transmissions, the exemplary embodiments of FIGS. 3 to 6 may indicate equivalent transmission and reception operations.

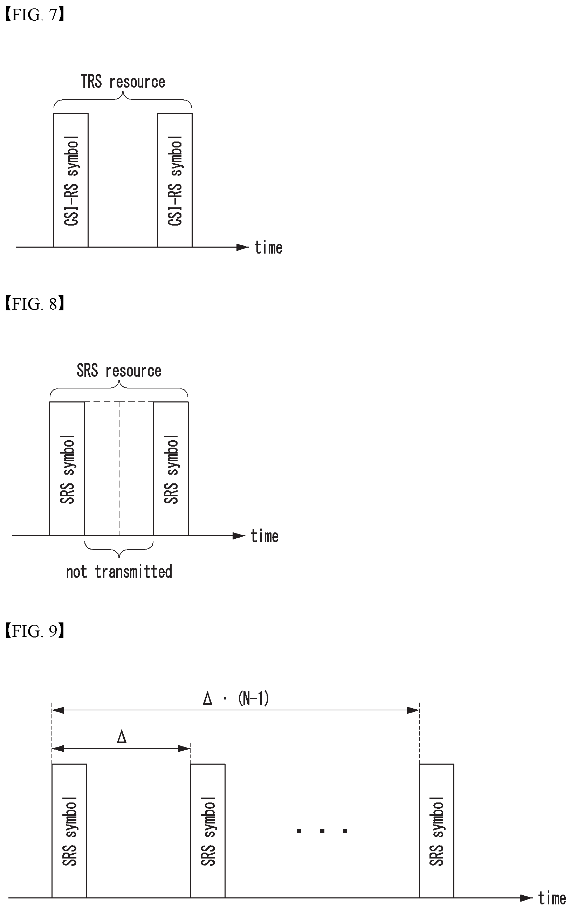

FIG. 7 is a conceptual diagram illustrating a first exemplary embodiment of a tracking reference signal (TRS) resource.

Referring to FIG. 7, to estimate the mobility of the terminal, a predetermined time interval may be required so that the mobility of the terminal is sufficiently reflected. A TRS resource configured as CSI-RS symbol(s) may be considered. The TRS may be a CSI-RS for tracking. The TRS may have the same CSI-RS port. The TRS may be configured in units of four symbols. Among the four symbols, two symbols may be configured as CSI-RS symbols. The terminal may perform a link management operation by using the TRS. Since the terminal moves during an interval between CSI-RS symbols in the time domain, a quality of a wireless channel may be assumed to change. Accordingly, the terminal may compensate for a Doppler effect and may utilize the estimated wireless channel quality for demodulating other DL signals/channels.

To estimate the mobility of the terminal, the same SRS port may be applied to SRS transmissions of the terminal during a predetermined time interval. According to a proposed method, SRS transmission may be performed in specific symbol(s) within one SRS resource, and SRS transmission may be dropped in other symbol(s) within the same SRS resource.

According to a proposed method, when one SRS resource includes multiple symbols, the terminal may transmit the SRS in the first symbol and the last symbol among the multiple symbols, and the terminal may not transmit the SRS in the remaining symbols excluding the first symbol and the last symbol among the multiple symbols.

FIG. 8 is a conceptual diagram illustrating a first exemplary embodiment of an SRS transmission method.

Referring to FIG. 8, an SRS resource may include two or more symbols. The terminal may transmit an SRS in the first symbol and the fourth symbol within the SRS resource, and the terminal may not transmit the SRS in the remaining symbols (e.g., the second symbol and the third symbol) within the SRS resource. Consistency for SRS transmissions in the first symbol and the fourth symbol within the SRS resource may be maintained. The same SRS port may be applied to SRS transmissions in the first symbol and the fourth symbol within the SRS resource.

According to a proposed method, the terminal may transmit an SRS using some ports (e.g., some SRS ports) in the first symbol within the SRS resource. For example, the terminal may transmit the SRS using only one port belonging to (e.g., associated with) the SRS resource. Alternatively, when the SRS resource is associated with one or more Tx panels, one port (e.g., one SRS port) may correspond to each Tx panel. In this case, the terminal may transmit the SRS using two or more ports in the same symbol.

When an SRS resource includes four or more symbols, the number of SRS ports may be four. SRS transmission may be performed using four SRS ports in each symbol based on a CDM scheme. When an SRS resource has N ports (e.g., N SRS ports), SRS transmission may be performed using all ports (e.g., N ports) in N symbols based on a CDM scheme. When an SRS resource has M ports (e.g., M SRS ports), the SRS may not be transmitted in N symbols. When SRS transmission is dropped (e.g., when M > N), there may be cases where the SRS is not transmitted in symbol(s). N and M may each be a natural number.

When an SRS resource has a single port, an SRS may not be transmitted in two or more symbols. According to a proposed method, even when an SRS resource includes N resources, the terminal may transmit the SRS using the same port at a predetermined time interval. For example, the terminal may transmit the SRS using one port in four symbols.

In the exemplary embodiment of FIG. 8, the terminal may transmit the SRS in some symbols within the SRS resource, and SRS transmission may be performed using some ports. For example, SRS transmission using one port may be performed twice. The terminal may transmit the SRS using two ports based on a CDM scheme. In this case, SRS transmission may be performed twice. The two ports may have a cross-polarization relationship. When fading characteristics other than cross-polarization characteristics are the same in the two ports, the base station may efficiently determine the mobility of the terminal.

According to a proposed method, the terminal may maintain consistency between SRS symbols belonging to one SRS resource.

To maintain consistency between SRS symbols, the terminal may maintain power (e.g., transmission power) constant. When the terminal transmits the SRS in some symbol(s) within an SRS resource and does not transmit the SRS in other symbol(s) within the same SRS resource, consistency may not be maintained because the transmission power of the SRS changes.

In this case, an additional capability may be introduced in the terminal. The terminal may transmit information indicating that the terminal has the additional capability to the serving base station. The serving base station may determine that the terminal has the additional capability based on the information received from the terminal. The additional capability of the terminal can be activated. The additional capability of the terminal may be activated by the terminal and/or the base station. Consistency may be a necessary condition for deriving a time offset, a frequency offset, and/or a phase offset. When joint channel estimation is not performed using SRS symbols (e.g., SRS transmissions), the necessary condition for consistency may be relaxed.

According to a proposed method, even when the transmission power allocated to SRS symbols changes while SRS transmission is performed, a time offset, a frequency offset, and/or a phase offset may be derived if other conditions for consistency are satisfied.

To maintain consistency, different UL signals/channels may not be transmitted between SRS symbols. For example, UL signals/channels may include UL signals/channels scheduled by DCI (e.g., PUSCH, PUCCH, PRACH, SRS) and/or UL signals/channels scheduled by higher layers (e.g., configured grant (CG) PUSCH, PUCCH, PRACH, SRS). The SRS here may be different from the SRS resource(s) that are at least intended to maintain consistency.

The terminal may receive information indicating port(s) (e.g., SRS port(s)) used for SRS transmission through signaling (e.g., RRC signaling). The port(s) indicated by the signaling may be at least one of the port(s) belonging to an SRS resource. Among the port(s) belonging to the SRS resource, a port with the lowest index may be used for SRS transmission. Alternatively, the terminal may receive signaling (e.g., RRC signaling) indicating that consistency is to be maintained across two or more SRS resources. An SRS port may correspond to a Tx panel of the terminal and/or a port associated with the Tx panel.

A single spatial relation information or TCI state may be applied to an SRS resource. According to a proposed method, two or more ports belonging to one SRS resource may correspond to different spatial relation information or different TCI states, and SRS transmission may be performed by simultaneously using the two or more ports. Alternatively, two or more spatial relation information or two or more TCI states may be applied to one port.

According to a proposed method, when two or more signals/channels are associated with a single SRS port, the two or more signals/channels may be configured as SSBs, DL RSs (e.g., CSI-RS for CSI, CSI-RS for tracking, CSI-RS for beam management, etc.), or SRSs. Different types of signals/channels may not be associated. The SSBs, DL RSs, and SRSs associated with the SRS port may belong to the same resource set. Although there is no concept of a resource set for SSBs, SSBs may have the same energy per resource element (EPRE), the same period, and/or the same slot offset. Even when the terminal transmits an SRS using a single SRS port, the base station may assume that the terminal has transmitted the SRS using two or more Tx panels.

According to a proposed method, an SRS may be simultaneously transmitted in two or more SRS resources. When the terminal simultaneously transmits the SRS using two or more Tx panels, different SRS resources may correspond to the two or more Tx panels. Different SRS resources may belong to the same resource set (e.g., the same SRS resource set) or different resource sets (e.g., different SRS resource sets).

An interval between symbols for SRS transmission may be configured (e.g., indicated) to the terminal through signaling (e.g., RRC signaling). Alternatively, the interval between symbols for SRS transmission may be derived based on the number of ports in an SRS resource. Alternatively, the interval between symbols for SRS transmission may be determined based on technical specifications.

FIG. 9 is a conceptual diagram illustrating a second exemplary embodiment of an SRS transmission method.

Referring to FIG. 9, SRS transmission may be performed in multiple SRS symbols. An interval between the SRS symbols may be Δ. Consistency for all SRS symbols may be maintained. Δ may be set in units of symbols, subslots, or slots. The base station may indicate (e.g., configure) information on Δ to the terminal. The terminal may identify Δ indicated (e.g., configured) by the base station. For example, when an SRS resource has N ports, SRS transmission may be performed using specific port(s), and the symbol(s) in which SRS transmission is performed may be determined as the first symbol and the last symbol in the SRS resource. Δ may be derived based on technical specifications.

A subslot may include 2 symbols, 7 symbols, or 14 symbols. The base station may configure (e.g., indicate) information indicating the length of a subslot to the terminal through signaling (e.g., RRC signaling). The terminal may identify the length of a subslot indicated by the base station. The length of a subslot may be determined based on technical specifications.

According to a proposed method, two or more SRS transmissions using SRS resource(s) may be emulated. When SRS transmission is performed in SRS symbols having the interval Δ within the same slot (e.g., single slot), the SRS transmission may be performed in one SRS resource or multiple SRS resources. The first SRS symbol and a subsequent SRS symbol after Δ · (*N* - 1) from the first SRS symbol may belong to a single slot. N may be a natural number.

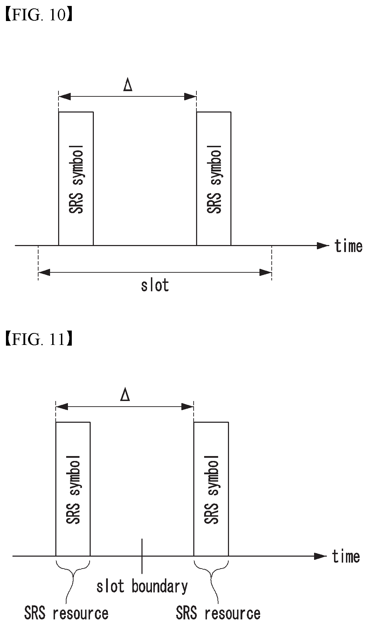

FIG. 10 is a conceptual diagram illustrating a third exemplary embodiment of an SRS transmission method.

Referring to FIG. 10, SRS transmission may be performed twice within a slot.

FIG. 11 is a conceptual diagram illustrating a fourth exemplary embodiment of an SRS transmission method.

Referring to FIG. 11, SRS transmission may be performed in SRS symbols in adjacent slots. SRS resources belonging to different slots may refer to two or more SRS resources. The SRS resources may include consecutive symbols since the same power and the same TA are maintained in the SRS resources.

At a slot boundary (or a subframe boundary), TPC may be reapplied, and TA may be reapplied. Consistency may not be expected to be maintained at the slot boundary (or a subframe boundary). When different UL signals/channels are transmitted, consistency may not be expected to be maintained. In order for the base station to utilize SRS for link management, it may be preferable to maintain consistency even when SRS resources belong to different slots (or different subslots).

According to a proposed method, consistency for SRS transmission(s) in SRS resource(s) belonging to different slots (or different subslots) may be expected to be maintained. One SRS resource may be repeated in different slots (or different subslots). Alternatively, a first SRS resource and a second SRS resource may be sequentially configured in different slots (or different subslots).

When one SRS resource is repeated, only one value of a repetition factor N (e.g., 2) may be used for link management in the base station. In this case, the repetition factor N may be fixed to n2 (e.g., 2), and signaling (e.g., RRC signaling) indicating enabling or disabling of the repetition factor N or signaling (e.g., RRC signaling) indicating presence or absence of the repetition factor N may be transmitted from the base station to the terminal. The operation for maintaining consistency may be enabled or disabled. A combination of the operation for maintaining consistency and the repetition factor N may be indicated to the terminal.

Configuration information of an SRS resource set may include at least a triggering scheme (e.g., periodic, semi-persistent, aperiodic) of an SRS resource. One or more SRS resources belonging to the SRS resource set may include information on at least one of different numbers of ports, different UL/joint TCIs, different spatial relationships, different power levels, different slots where different SRS resources are configured, or different periods of different SRS resources.

The usage of the SRS resources to which the proposed methods are applied may be limited to beam management. Alternatively, the usage of the SRS resources to which the proposed methods are applied may be limited to antenna switching.

One port may be repeated, but the one port may not be repeated in consecutive symbols. Since a predetermined interval Δ between symbols is applied, a repetition indication may be applied separately. When repetition is indicated in the SRS resource, conventional repetition and the proposed repetition may not be configured simultaneously.

According to a proposed method, link management may be introduced into the usage of the SRS resource set. The SRS resource set may include one or more SRS resources, and a designated one of the one or more SRS resources may be repeated.

A defer operation of PUSCH transmission may be supported. Based on a UL resource pattern (e.g., slot pattern, TDD configuration), PUSCH transmission may not be performed. In this case, the PUSCH transmission may not be dropped, and the PUSCH transmission may be deferred. The PUSCH transmission may be performed in a subsequent slot. The defer operation of PUSCH transmission may be applied to SRS transmission. The first symbol in which an SRS is transmitted may not be changed within a slot, and a slot in which SRS is transmitted may be deferred. Counting of available slots for SRS transmission in the SRS resource may be applied differently from conventional technical specifications.

When SRS transmission is repeated in one SRS resource, the defer operation of SRS transmission may be used to derive a slot to which the first symbol of the first instance of the SRS resource belongs. In a subsequent instance (e.g., second instance) of the SRS resource, a separate defer operation may not be applied. The interval Δ between the first instance and the second instance may be maintained.

When a method for maintaining consistency is applied while SRS transmission is performed in different SRS resources, a defer operation may not be applied to SRS transmission in a second SRS resource following a first SRS resource. In other words, a defer operation of SRS transmission may be applied in the first SRS resource. When the defer operation of SRS transmission is applied in the first SRS resource, the same defer operation of SRS transmission may be applied in the second SRS resource. Alternatively, the defer operation of SRS transmission may not be applied in the first SRS resource, and the defer operation of SRS transmission may be applied in the second SRS resource. Alternatively, the defer operation of SRS transmission may not be applied in either the first SRS resource or the second SRS resource.

A change according to an instruction related to transmission of UL signals/channels other than SRS or a UL resource pattern (e.g., slot pattern or TDD configuration) may be applied to each of the first SRS resource and the second SRS resource. In this case, at least SRS transmission may be dropped. The dropping of SRS transmission may be performed in units of symbols.

When SRS transmission is dropped in some symbols, a time window for maintaining consistency (e.g., actual time domain window) may be restarted. The above-described operation (e.g., the operation of restarting the time window) may be applied when SRS is transmitted in three or more symbols. When capability of the terminal for the above-described operation is supported (e.g., activated), the above-described operation may be applied.

When one or more TRPs perform cooperative communication, considering a non-ideal backhaul and/or Doppler shift/spectrum, it may be preferable that the SRS resource is repeated according to a time interval. When consistency is maintained while SRS is transmitted, SRS may be utilized not only for link management but also for downlink coordinated joint transmission (CJT).

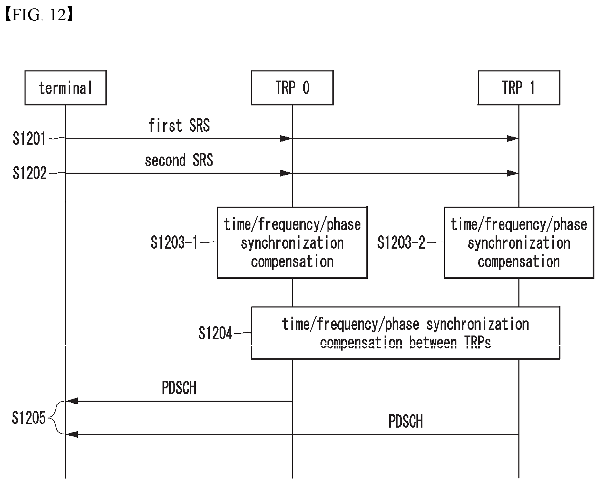

FIG. 12 is a sequence chart illustrating a second exemplary embodiment of a communication method between a terminal and TRPs.

Referring to FIG. 12, TRPs with a non-ideal backhaul may perform CJT. A TRP 0 may be a serving base station. The TRP 0 and a TRP 1 may perform CJT. The terminal may transmit a first SRS to one or more TRPs (S1201). The terminal may transmit a second SRS to one or more TRPs (S1202). The first SRS transmission may refer to a first UL RS transmission, and the second SRS transmission may refer to a second UL RS transmission. Multiple SRS transmissions (e.g., the first SRS transmission and the second SRS transmission) may be performed according to a request from the TRP 0 and/or TRP 1. For example, the TRP 0 and/or TRP 1 may transmit a message requesting multiple SRS transmissions (e.g., multiple UL RS transmissions) to the terminal, and the terminal may perform multiple SRS transmissions based on the request from the TRP 0 and/or TRP 1. When multiple SRS transmissions are not requested, the terminal may transmit a single SRS (e.g., the first SRS).

The second SRS may be transmitted after a predetermined time from a time of transmitting the first SRS. The interval between SRS transmissions (e.g., a predetermined time, Δ) may be configured (e.g., indicated) to the terminal through signaling (e.g., RRC signaling). The terminal may transmit two or more SRSs according to the predetermined time interval. Consistency and/or continuity for the first SRS transmission and the second SRS transmission may be maintained. In other words, consistency may refer to consistency (e.g., equivalence) in at least one of TAs, transmission powers, Tx beams, spatial relations, TCI states, or frequency resources for the first SRS transmission and the second SRS transmission. Continuity may refer to phase continuity for the first SRS transmission and the second SRS transmission. While consistency for the first SRS transmission and the second SRS transmission is maintained, a power level (e.g., transmission power level) may not be updated. The first SRS transmission and the second SRS transmission may be repeated transmissions performed in the same SRS resource. The first SRS transmission and the second SRS transmission may be performed in different SRS resources. The different SRS resources may belong to the same SRS resource set or different SRS resource sets. The first SRS transmission and the second SRS transmission may be transmitted in the same slot or different slots.

The first SRS transmission and the second SRS transmission may maintain consistency. The terminal may transmit the first SRS and the second SRS using the same power and/or the same Tx beam in the same subcarrier(s). Each of the TRP 0 and TRP 1 may receive the SRS(s) (e.g., the first SRS and/or the second SRS) from the terminal and derive information necessary for link management based on the received SRS(s). The information necessary for link management may include a time offset, a frequency offset, and/or a phase offset. Each of the time offset, the frequency offset, and the phase offset may be derived based on a difference between the first SRS and the second SRS. The time offset may indicate a time difference, the frequency offset may indicate a frequency difference, and the phase offset may indicate a phase difference.

The TRP 0 may perform a compensation operation for time/frequency/phase synchronization using the information derived based on the SRS(s) (S1203-1). The TRP 1 may perform a compensation operation for time/frequency/phase synchronization using the information derived based on the SRS(s) (S1203-2). For example, each of the TRP 0 and TRP 1 may derive a difference according to a time interval between the first SRS transmission and the second SRS transmission and perform a compensation operation for time synchronization and/or phase synchronization based on the derived difference. The difference according to the time interval may correspond to the phase difference. Each of the TRP 0 and TRP 1 may derive a difference between a power (e.g., transmission/reception power) of the first SRS and a power (e.g., transmission/reception power) of the second SRS and perform a compensation operation for time synchronization and/or phase synchronization based on the derived difference. The power difference between the SRSs may correspond to the phase difference.

The TRPs may exchange the derived information via a backhaul (e.g., non-ideal backhaul). For example, the TRP 0 may derive a first difference (e.g., a time difference, a power difference, a phase difference, etc.) between the first SRS and the second SRS and transmit information of the first difference to the TRP 1. The TRP 1 may obtain the information of the first difference from the TRP 0. The TRP 1 may derive a second difference (e.g., a time difference, a power difference, a phase difference, etc.) between the first SRS and the second SRS and transmit information of the second difference to the TRP 0. The TRP 0 may obtain the information of the first difference from the TRP 1. Each of the TRP 0 and TRP 1 may perform a compensation operation (e.g., pre-compensation) for time/frequency/phase synchronization based on the first difference and the second difference.

As another method, information derived based on the SRS(s) may be delivered to a single TRP (e.g., a TRP other than the TRP 0 and TRP 1) or a single base station (e.g., a digital unit (DU) or central unit (CU)). A difference between the time offset of the TRP 0 and the time offset of the TRP 1 may be derived based on the information derived from the SRSs. A difference between the frequency offset of the TRP 0 and the frequency offset of the TRP 1 may be derived based on the information derived from the SRSs. A difference between the phase offset of the TRP 0 and the phase offset of the TRP 1 may be derived based on the information derived from the SRSs. The difference between the time offsets of the TRPs, the difference between the frequency offsets of the TRPs, and/or the difference between the phase offsets of the TRPs may be derived by the TRP or base station possessing the information derived from the SRSs. The difference (e.g., the difference between the time offsets, difference between the frequency offsets, or difference between the phase offsets) derived by the TRP or base station may be delivered to the TRP 0 and TRP 1.

Each of the TRP 0 and TRP 1 may derive the difference between the time offsets of the TRPs, the difference between the frequency offsets of the TRPs, and/or the difference between the phase offsets of the TRPs based on the information derived from the SRSs. When the difference between the time offsets of the TRPs, the difference between the frequency offsets of the TRPs, and/or the difference between the phase offsets of the TRPs is derived by the TRP or base station other than the TRP 0 and TRP 1, the TRP or the base station may notify the TRP 0 and TRP 1 of the difference between the time offsets of the TRPs, the difference between the frequency offsets of the TRPs, and/or the difference between the phase offsets of the TRPs. In step S1204, the TRP 0 and TRP 1 may perform a compensation operation (e.g., pre-compensation operation) for time/frequency/phase synchronization based on the difference between the time offsets of the TRPs, the difference between the frequency offsets of the TRPs, and/or the difference between the phase offsets of the TRPs.

A pre-compensation operation may be performed for PDSCH transmission. The TRP 0 and/or TRP 1 may derive information necessary for the pre-compensation operation to transmit a PDSCH based on the CJT scheme. The TRP 0 and/or TRP 1 may perform a pre-compensation operation for the PDSCH. The TRP 0 and TRP 1 may transmit the PDSCH based on the CJT scheme (S1205). The terminal may receive the PDSCH from the TRP 0 and TRP 1. Since the pre-compensation operation for the PDSCH is performed in the TRP 0 and/or TRP 1, at least a procedure for estimating/compensating a frequency offset in a PDSCH reception procedure of the terminal may be simplified or omitted.

When the terminal has mobility, even if downlink CJT is not performed, it may be preferable that a TRP (e.g., TRP 0 or TRP 1) tracks/estimates the mobility of the terminal, and it may be preferable that a TRP (e.g., TRP 0 or TRP 1) performs an estimation/compensation operation based on the mobility of the terminal. Since the first SRS transmission and the second SRS transmission maintain consistency, it may be preferable that the SRS is utilized as an uplink TRS.

The serving base station (or TRP 0, TRP 1) may receive the first SRS and the second SRS from the terminal and derive a difference between a wireless channel estimated based on the first SRS and a wireless channel estimated based on the second SRS. Referring to Equation 1, the first SRS may experience h and the second SRS may experience h'. When the terminal does not move, a difference in small-scale fading may not be large, and since consistency is maintained, h' ≈ h may be assumed.

The difference between wireless channels may be obtained due to small-scale fading of the wireless channels. Depending on the mobility of the terminal, small-scale fading may exhibit a certain difference. The difference may be utilized as an indicator for identifying the mobility of the terminal at the serving base station.

The consistency maintained by the terminal may be necessary for deriving the difference in small-scale fading at the serving base station. When the terminal transmits the first SRS and the second SRS without maintaining consistency, referring to Equation 1, since $m ⋅ {e}^{ϕ \sqrt{- 1}} \neq 1$, *h'* ≈ h may not be established.

In a network (e.g., communication system) where multiple TRPs (e.g., multiple-TRP (mTRP)) are deployed, when the terminal transmits an SRS, a first TRP (e.g., TRP 0) and a second TRP (e/g/ TRP 1) may receive the SRS. A wireless channel estimated based on the SRS received by the first TRP may be different from a wireless channel estimated based on the SRS received by the second TRP. Even when the mobility of the terminal is commonly reflected, it may be difficult for the first TRP and the second TRP to estimate a time offset, frequency offset, and/or phase offset between them, so the wireless channels estimated at the first TRP and the second TRP may be different.

When the terminal transmits the first SRS and the second SRS at a predetermined time interval, the first TRP and the second TRP may identify the mobility of the terminal based on the first SRS and the second SRS and may estimate the time offset, frequency offset, and/or phase offset between them through exchange of information through the backhaul.

In order for the first TRP and the second TRP to identify the mobility of the terminal using only the first SRS received from the terminal, frequencies of oscillators of the first TRP and the second TRP need to be synchronized. When the frequencies of the TRPs are not synchronized, an estimation result based on the received first SRS may be a sum of a frequency offset of the oscillators and a Doppler frequency. In other words, the frequency of the oscillator and the Doppler frequency may not be separately estimated. If the frequency of the oscillator and the Doppler frequency can be separately estimated, the first TRP and the second TRP may acquire frequency synchronization by compensating for the frequency offset. When the frequencies between the first TRP and the second TRP are not synchronized, the frequency offset between the TRPs may be considered as not estimated.

In this situation, the pre-compensated frequency offset at the first TRP and the second TRP may be incomplete. Therefore, when the Doppler effect occurs again in the downlink, the terminal may receive a PDSCH with a frequency offset. In other words, even when the first TRP and the second TRP compensate for the frequency offset through information exchange via the backhaul, the Doppler effect may not be pre-compensated.

A frequency that the terminal considers as *f* may be *f'.* When the terminal transmits the first SRS at the frequency f', a frequency of the first SRS received at the first TRP may be *f₁. f₁* may have a relationship of *f₁ = f'* + *Δf₁,* and f' may have a relationship of *f' = f + f*₀*.* The terminal may not know a value of *f*₀, and the terminal may not manage the frequency.

When a TRP receives a PUSCH or a PUCCH from the terminal, there is no need to distinguish each element of f' (e.g., oscillator instability (e.g., oscillator frequency), Doppler effect (e.g., Doppler frequency)). The terminal and the TRP may not perform demodulation/decoding only for UL signals/channels, and DL channels may be estimated based on the SRS. By utilizing UL-DL reciprocity in a communication system that supports TDD, the burden of CSI-RS and CSI reporting may be reduced, and the SRS may be used instead of CSI-RS and CSI reporting. If *f*₀ and the Doppler effect Δf₁ of the terminal are not pre-compensated, the frequency offset may not be canceled. Since the serving base station estimates only *f*₀ *+ Δf₁,* the serving base station may not transmit a DL signal/channel with a pre-compensated frequency offset to the terminal. The serving base station may obtain information on the DL using the SRS based on time synchronization and/or spatial beam reciprocity without frequency synchronization.

Two or more TRPs may transmit PDSCH(s) to the terminal. The two or more TRPs may transmit the PDSCH to the terminal after pre-compensating for the frequency offset. The two or more TRPs may pre-compensate for the frequency offset through the exchange of information via the backhaul (e.g., Xn interface or Nn interface), but since the two or more TRPs do not know an error *f*₀ of the terminal, they may not be able to estimate the Doppler effect ( Δf₁ and *Δf₂).* The first TRP may not know the error *f*₀ caused by the oscillator of the terminal and may not separately measure *f'* and Δ*f*₁. The second TRP may receive the UL signal/channel of the terminal at *f*₂. *f*₂ may have a relationship of *f*₂ = *f*' + Δ*f*₂, but the second TRP may not separately measure *f'* and Δ*f*₂.

Even when the first TRP and the second TRP acquire frequency synchronization with each other through information exchange via the backhaul, it may be difficult to distinguish the Doppler effect from the error of the terminal itself. For pre-compensated PDSCH transmission, a procedure for separating only the Doppler effect may be necessary.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
transmitting a first uplink reference signal (UL RS) to one or more transmission and reception points (TRPs);
transmitting a second UL RS to the one or more TRPs after a preset time from a time of transmitting the first UL RS; and
receiving a downlink (DL) channel compensated based on the first UL RS and the second UL RS from the one or more TRPs,
wherein consistency in transmissions of the first UL RS and the second UL RS is maintained.

2. The method according to claim 1, further comprising: receiving a request message requesting multiple UL RS transmissions from at least one TRP among the one or more TRPs,
wherein transmissions of the first UL RS and the second UL RS are performed based on the request message.

3. The method according to claim 1, wherein the DL channel is compensated based on a first difference between the first UL RS and the second UL RS received at a first TRP among the one or more TRPs and a second difference between the first UL RS and the second UL RS received at a second TRP among the one or more TRPs.

4. The method according to claim 3, wherein the first difference and the second difference are each a time difference according to a time interval between transmission of the first UL RS and transmission of the second UL RS, and the time difference corresponds to a phase difference.

5. The method according to claim 3, wherein the first difference and the second difference are each a power difference between a power of the first UL RS and a power of the second UL RS, and the power difference corresponds to a phase difference.

6. The method according to claim 1, wherein the DL channel is a DL channel in which at least one of a time offset, frequency offset, or phase offset is compensated.

7. The method according to claim 1, wherein the consistency includes at least one of a same timing advance (TA) or a same transmission power.

8. The method according to claim 1, wherein phase continuity in transmissions of the first UL RS and the second UL RS is maintained.

9. A method of a first transmission and reception point (TRP), comprising:
receiving a first uplink reference signal (UL RS) from a terminal;
receiving a second UL RS from the terminal after a preset time from a time of receiving the first UL RS;
performing compensation for a downlink (DL) channel based on the first UL RS and the second UL RS; and
transmitting the DL channel to the terminal,
wherein consistency in transmissions of the first UL RS and the second UL RS is maintained.

10. The method according to claim 9, further comprising: transmitting a request message requesting multiple UL RS transmissions to the terminal,
wherein transmissions of the first UL RS and the second UL RS are performed based on the request message.

11. The method according to claim 9, wherein the performing of compensation for the DL channel comprises:
deriving a first difference between the first UL RS and the second UL RS;
receiving, from a second TRP, information of a second difference between the first UL RS and the second UL RS received at the second TRP; and
performing compensation for the DL channel based on the first difference and the second difference.

12. The method according to claim 11, wherein the first difference and the second difference are each a time difference according to a time interval between the first UL RS and the second UL RS, and the time difference corresponds to a phase difference.

13. The method according to claim 11, wherein the first difference and the second difference are each a power difference between a power of the first UL RS and a power of the second UL RS, and the power difference corresponds to a phase difference.

14. The method according to claim 11, wherein the consistency includes at least one of a same timing advance (TA) or a same transmission power.

15. The method according to claim 11, wherein phase continuity in transmissions of the first UL RS and the second UL RS is maintained.

16. A terminal comprising at least one processor, wherein the at least one processor causes the terminal to perform:
transmitting a first uplink reference signal (UL RS) to one or more transmission and reception points (TRPs);
transmitting a second UL RS to the one or more TRPs after a preset time from a time of transmitting the first UL RS; and
receiving a downlink (DL) channel compensated based on the first UL RS and the second UL RS from the one or more TRPs,
wherein consistency in transmissions of the first UL RS and the second UL RS is maintained.

17. The terminal according to claim 16, wherein the at least one processor further causes the terminal to perform: receiving a request message requesting multiple UL RS transmissions from at least one TRP among the one or more TRPs,
wherein transmissions of the first UL RS and the second UL RS are performed based on the request message.

18. The terminal according to claim 16, wherein the DL channel is compensated based on a first difference between the first UL RS and the second UL RS received at a first TRP among the one or more TRPs and a second difference between the first UL RS and the second UL RS received at a second TRP among the one or more TRPs.

19. The terminal according to claim 18, wherein the first difference and the second difference are each a time difference according to a time interval between transmission of the first UL RS and transmission of the second UL RS, and the time difference corresponds to a phase difference.

20. The terminal according to claim 18, wherein the first difference and the second difference are each a power difference between a power of the first UL RS and a power of the second UL RS, and the power difference corresponds to a phase difference.
